# EUROPEAN PATENT SPECIFICATION

(11) **EP 0 386 428 B1**
(45) Date of publication and mention of the grant of the patent: **27.07.1994**
(21) Application number: 90101392.0
(22) Date of filing: 24.01.1990
(51) Int. Cl.: F16L 58/04

(54) **Process and equipment for lining concrete pipes**
Verfahren und Vorrichtung zum Beschichten von Rohren
Procédé et dispositif pour le revêtement de tuyaux

(30) Priority: 26.01.1989 IT 1920589
(43) Date of publication of application: 12.09.1990
(73) Proprietor: ASSOTUBI ECOLOGICA S.r.l., I-22044 Inverigo, Como (IT)
(72) Inventor: Bosisio, Sergio, I-22044 Inverigo, Como (IT)
(74) Representative: Riccardi, Sergio

(56) References cited:
- DE-A- 3 002 231
- DE-U- 8 910 784
- GB-A- 749 497
- PATENT ABSTRACTS OF JAPAN vol. 8, no. 30 (C-209)(1467) 8 February 1984, & JP-A-58 193770 (HATSUKOO K.K.) 11 November 1983

## Description

This invention relates to a process and the relative equipment by which turbocentrifuged or vibrated concrete pipes can be lined with single thread glass fibre and anti-acid cloth impregnated with isophthalic bisphenolic resins and the like, the said pipes being traditionally used for carrying sewage or other highly acid substances and for irrigation and pressurised water pipelines.

It is known that pipes and headers in turbocentrifuged radially prestressed concrete or vibrated concrete are used to construct pipelines for sewage or acidic liquids.

These pipes are connected to male-female sockets and a layer of tarry material is usually applied on the inside with the aim of protecting the bed on which the sewage flows from the corrosive agents contained in the sewage and, above all, protecting the pipe from the corrosion caused by the highly acidic fumes and vapours which are generated inside the pipes which are generally buried at a certain depth.

Obviously, these pipes are irremediably damaged after a certain time and have to be replaced, which is a very expensive operation.

Document DE-A- 3 002 231 discloses a concrete pipe comprising a lining of synthetic resins, but this document does not disclose any method or apparatus to make in practice such a pipe. Therefore there is a need of a practical, efficient and reliable process and equipment for producing this type of pipes.

These problems are solved by the process of independent Claim 1 and the equipment of independent Claim 4. Further advantageous features are recited in dependent Claims 2-3 and 5-8, respectively.

According to this invention each section of pipe is lined in advance with a layer of glass fibre and anti-acid cloth impregnated with bisphenolic resin or a similar substance. In practice, this lining is effected by means of a tubular metal element inserted in the pipe of concrete, having an internal diameter which permits the element to carry a layer of lining of the thickness required for the lining of the pipe.

Subsequently, the lining is impregnated by the injection of bisphenolic resins which solidify in the air, leaving a perfectly smooth surface which provides maximum protection against acids and facilitates the flow of the liquid, almost totally eliminating decantation of the liquid.

These and other characteristics are explained more clearly in the following detailed description which is a purely non-limiting example of the scope of the invention, and from the various figures of the attached illustrative drawings, in which:

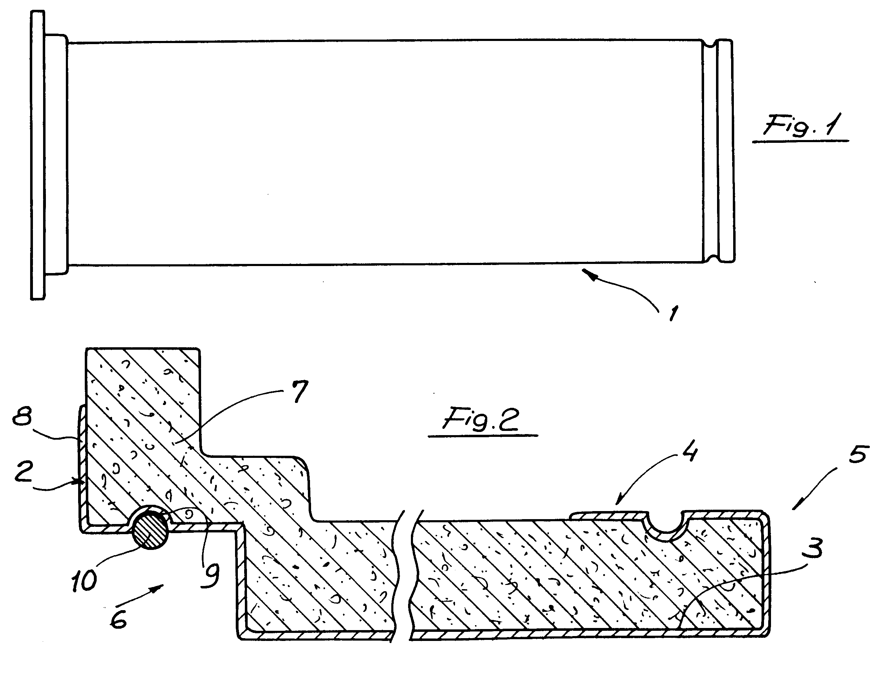

Figure 1 shows a side view of a section of concrete pipe traditionally used for the construction of sewage or acid liquid pipelines;
Figure 2 shows a highly enlarged cross section of the profile of the two ends of an element of sewer piping, showing the socket coupling between one section and the next;

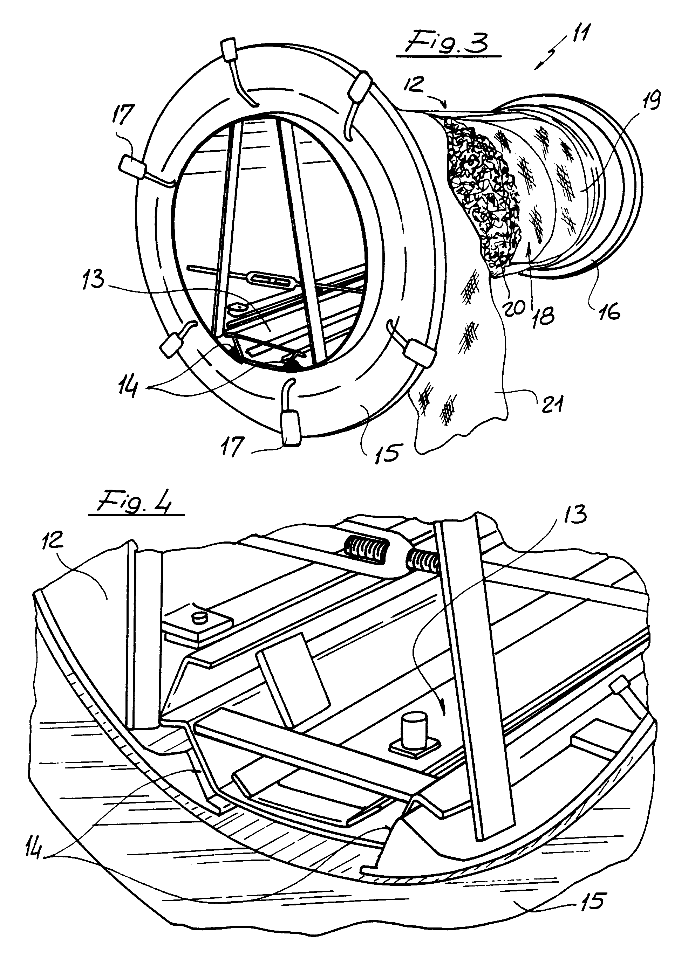

Figure 3 shows a perspective view of the die, showing the elements which compose the anti-acid lining, applied on the outside by binding;
Figure 4 shows an enlarged detail of the die, showing the sector which moves on an inclined plane having the function of expanding and contracting the die internally to permit the detachment and uncoupling after the resins which have been injected have dried;

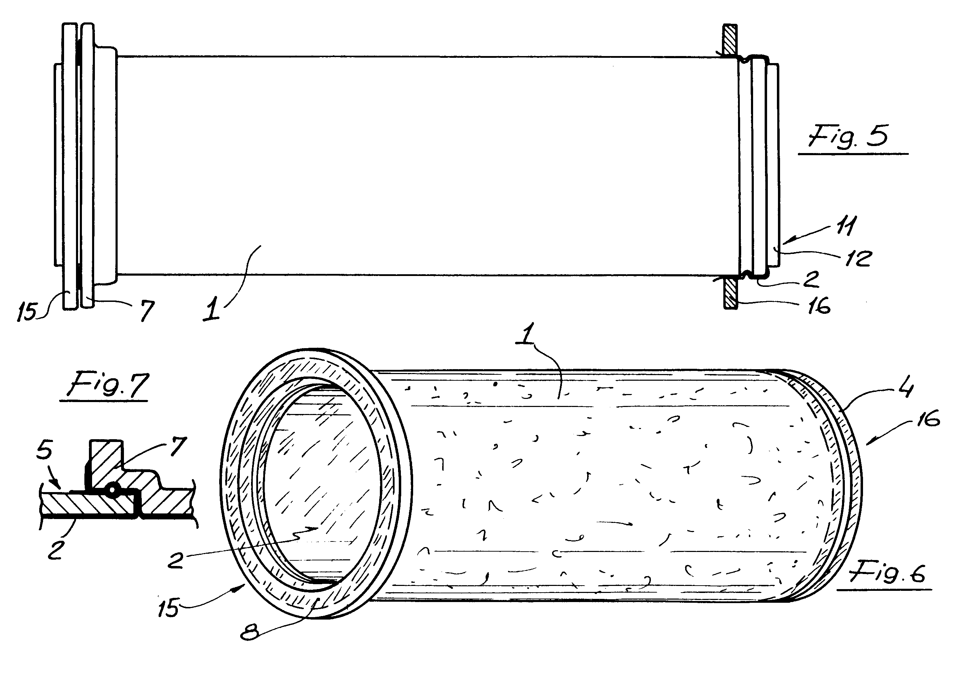

Figure 5 shows a complete side view of a pipe prepared for the injection of bisphenolic resin;
Figure 6 shows a complete perspective view of a section of piping line according to the process in question;
Figure 7 shows a schematic cross section of a coupling of two concrete pipes lined according to this invention;
Figure 8 shows a schematic cross section demonstrating a detail of the male flanging used for the lining of the pipe header, according to a variant of the invention;
Figure 9 shows a cross sectional view demonstrating a detail of the female flanging used for the lining of the socket header of the pipe, according to a variant of the invention; and
Figure 10 shows a view of an assembly in cross section, demonstrating the coupling between two pipes whose headers have been lined by means of the flanging, cited as variants to this invention and shown separately in figures 8 and 9.

Referring to the various figures of the attached drawings, the process in question provides for lining in advance of the pipes 1 in turbocentrifuged or vibrated concrete with a layer 2 of glass fibre impregnated with bisphenolic resin or a similar substance.

In addition to the inside walls 3, the lining will also extend to an external portion 4 of the male end 5 of the pipe and to the whole of the coupling seat 6 of the female flanging 7, including a small front circumferential portion 8.

This also provides protection for the seat 9 of the gasket 10 inside the flanged socket and the surrounding area which is notoriously subject to damage because of leakages of sewage and acidic gases.

In practice, a specific equipment 11 is used consisting of a tubular element 12 equipped with a mobile sector 13 operating between two inclined plane shoulders 14, acting as an expander which presses the glass fibre lining 2 uniformly against the internal walls of the concrete pipe 1 before and during the injection of the bisphenolic resins and, subsequently, permits the detachment of the tubular element from the joint and its withdrawal when the lining has dried.

The said die comprises two mobile flanging 15, 16 which will butt on the female flanged part 6 and the male end 5 of the concrete pipe.

The female flanging 15 also has the connections 17 for the injection of the bisphenolic resins and has an internal profile which is the reverse of the socket seat of the concrete pipe.

In operational terms, the die tube is prepared with a layer of binding 18 in anti-acid glass cloth 19, a layer of glass fibre 20, a pad and a final layer of glass cloth 21.

When this has been done, the die is inserted in the concrete pipe 1, counterflanged and after being correctly bedded and locked into position, bisphenolic resins or similar substances are injected enbloc.

After solidification, the longitudinal mobile sector 13 is released and the male counterflange is disconnected and the die is withdrawn.

When the process has been completed, the pipe has been provided with a lining 2 on the inside and on the headers of a given thickness which is extremely compact and smooth and is resistent to any acid agent.

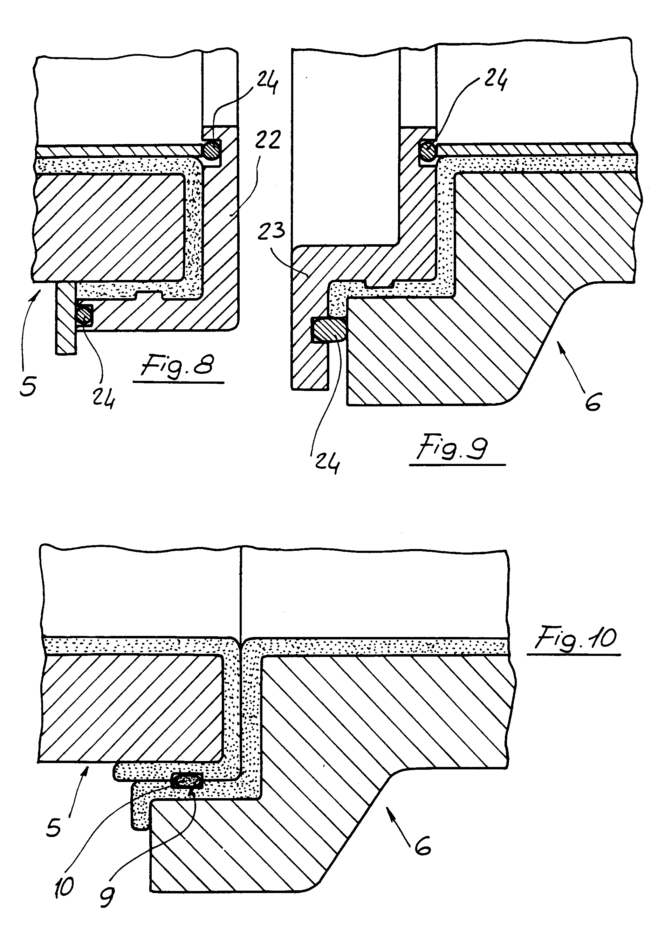

According to a variant to this invention and referring to figures 8, 9 and 10, to provide a lining which is even more uniform in thickness and to avoid any leakage of the resin from the headers during injection at high pressure, special male 22 and female 23 flanges are used which reproduce the profile of the headers 5, 6 themselves and which have two circumferential gaskets 24 in order to obtain a perfect seal with the internal tubular die.

This also permits an improved profiling of the male and female terminal parts of the pipe lining to be obtained, guaranteeing that they fit together better with the extra aid of a perimetral gasket 10 inserted in a special seat 9 around the circumference of the pipes, as is provided for in the basic solution of this invention.

In addition, in this particular case, the tubes for the injection of the bisphenolic resin in the space between the concrete pipe and the die are located in the internal tubular element and not on the flanging of the headers.

The preceding detailed description makes it clear that this invention is the right solution to provide long lasting and resistant linings for concrete pipes for the construction of pipelines for sewers or highly acidic liquids.

## Claims

1. Process for lining concrete pipes having a male end and a female flanged part, comprising the steps of:
- preparing a glass wool lining;
- applying it around a tubular element;
- said tubular element acting as a support for said lining and as a die for a subsequent injection of a bisphenolic or isophthalic resin;
- said tubular element being equipped with a longitudinal mobile sector operating between two inclined plane shoulders acting as an expander which presses the glass wool lining uniformly against the internal wall of the concrete pipe before and during the injection of the resins and subsequently allows the detachment of the tubular element from the pipe and its withdrawal when the lining has dried;
- said tubular element being also provided with two mobile flangings which will butt on the female flanged part and the male end of the concrete pipe, respectively;
- the female flanging having connections for the injection of the resins and an internal profile which is the reverse of the socket seat of the concrete pipe;
- inserting the tubular element into the concrete pipe;
- counterflanging, correctly positioning and locking the tubular element in the concrete pipe;
- injecting enbloc the resins;
- after solidification, releasing the longitudinal mobile sector, disconnecting the flangings and withdrawing the tubular element from the finished pipe.

2. Process according to claim 1, characterised in that the said lining (18) consists of an anti-acid cloth (19), a pad of glass wool (20) and a second anti-acid cloth (21) which can subsequently be impregnated with a bisphenolic or isophthalic resin, in order to form a protective layer which is resistent to any type of acid agent.

3. Process according to claim 1, characterised in that the said tubular die element also has two flanged headers designed to act as counter-rabbets so that the seats of the male-female connections of the pipe can be lined en bloc.

4. Equipment (11) for lining concrete pipes (1) having a male end (5) and a female flanged part (6), with a glass wool lining and a subsequent injection of a bisphenolic or isophthalic resin, comprising a tubular element (12) equipped with a longitudianl mobile sector (13) operating between two inclined plane shoulders (14), acting as an expander which presses the glass wool lining (2) uniformly against the internal wall of the concrete pipe (1) before and during the injection of the resins, and subsequently allows the detachment of the tubular element (12) from the pipe and its withdrawal when the lining has dried; said tubular element (12) being also provided with two-mobile flanges (15, 16) which will butt on the female flanged part (6) and the male end (5) of the concrete pipe (1), respectively; the female flange (15) having connections (17) for the injection of the resins and an internal profile which is the reverse of the socket seat of the concrete pipe.

5. Equipment according to Claim 4, characterised in that the mobile flange (15) allows that also the circumferential seat (9) for the socket connection provided with a gasket (10), be lined with the glass fibre reinforced resin, in order to avoid leakage of acidic liquid.

6. Equipment according to claim 4, characterised in that the header flanges (22, 23) have a profile which enables a frontal rabbet connection with the internal tubular die element (12) in order to obtain a better male-female (5,6) connection profile between the various pipe sections.

7. Equipment according to claim 6, characterised in that the said flanging (22, 23) also comprises two circumferential gaskets (24) which respectively butt in the internal tubular die element (12) and the external part of the pipe (1), in order to obtain maximum seal against the leakage of the resin during injection under high pressure.

## Patentansprüche

1. Verfahren zum Beschichten von Betonrohren, die ein steckbares Endstück und ein aufnahmefähiges Muffenteil aufweisen, das die Schritte umfaßt:
- Vorbereiten einer Glaswolleauskleidung,
- Aufbringen der Glaswolle rund um ein rohrförmiges Bauteil, wobei
- das rohrförmige Bauteil als eine Unterstützung für das Beschichten und als eine Spritzgußform für ein nachfolgendes Spritzgießen eines Biphenol- oder Iso-phtalatharzes funktioniert,
- das rohrförmige Bauteil mit einem longitudinalen beweglichen Abschnitt ausgestattet ist, der zwischen zwei abgeschrägten ebenen Schultern arbeitet, die als ein Expander, welcher die Glaswolleauskleidung glelchmäßig gegen die Innenwand des Betonrohres vor und während des Spritzgießens der Harze preßt und nachfolgend die Abtrennung des röhrenförmigen Bauteils von dem Rohr und dessen Entnahme, wenn die Beschichtung getrocknet ist, erlaubt,
- das rohrförmige Bauteil auch mit zwei beweglichen Flanschen, welche an das aufnahmefähige Muffenteil bzw. an das steckbare Endstück des Betonrohres anstoßen, vorgesehen ist,
- der aufnahmefähige Flansch Anschlüsse für das Einspritzen des Harzes und ein Innenprofil aufweist, welches die Rückseite des Muffensitzes des Betonrohres ist,
- Einschieben des rohrförmigen Bauteils in das Betonrohr,
- Gegenflanschen, genaues Positionieren und Verschließen des rohrförmigen Bauteils in dem Betonrohr,
- Spritzgießen des Harzes im Ganzen,
- nach der Erstarrung, Freigeben des longitudinalen beweglichen Abschnitts, Abtrennen der Flansche und Herausziehen des rohrförmigen Bauteils aus dem endbearbeiteten Rohr.

2. Verfahren nach Anspruch 1, dadurch gekennzeichnet, daß die Beschichtung (18) aus einem säurefesten Stoff (19) besteht, einem Polster aus Glaswolle (20) und einem zweiten säurefesten Stoff (21), welche nachfolgend mit Biphenol- oder Isophthalatharz imprägniert werden können, um eine Schutzschicht, die gegen jede Art von Säureagens resistent ist, zu bilden.

3. Verfahren nach Anspruch 1, dadurch gekennzeichnet, daß das rohrförmige Gußformbauteil auch zwei angeflanschte Verteilerköpfe aufweist, die als Gegenfalz entworfen sind, so daß die Sitze der Muffenverbindungen des Rohres im Ganzen beschichtet werden können.

4. Vorrichtung (11) zum Beschichten von Betonrohren (1), die ein steckbares Endstück (5) und ein aufnahmefählges Muffenteil (6) aufweisen, mit einer Glaswolleauskleidung und einem nachfolgenden Spritzgießen eines Biphenol- oder Isophtalatharzes, umfassend ein rohrförmiges Bauteil (12), das mit einem longitudinalen beweglichen Abschnitt (13) ausgestattet ist, der zwischen zwei abgeschrägten ebenen Schultern (14) arbeitet, die als Expander wirken, welcher die Glaswollebeauskleidung (2) gleichmäßig gegen die Innenwand des Betonrohres (1) vor und während des Spritzgießens der Harze preßt und nachfolgend die Abtrennung des rohrförmigen Bauteils (12) von dem Rohr und dessen Entnahme, wenn die Beschichtung getrocknet ist, erlaubt, wobei das rohrförmige Bauteil (12) auch mit zwei beweglichen Flanschen (15, 16) ausgestattet ist, welche an den aufnahmefähigen Muffenteil (6) bzw. an das steckbare Endstück (5) des Betonrohres (1) anstoßen, wobei der aufnehmende Flansch (15) Anschlüsse (17) für das Spritzgießen der Harze und ein Innenprofil aufweist, welches die Rückseite des Muffensitzes des Betonrohres ist.

5. Vorrichtung nach Anspruch 4, dadurch gekennzeichnet, daß der bewegliche Flansch (15) erlaubt, daß der Umfangssitz (9) für die Muffenverbindung, die mit einer Dichtung (10) versehen ist, mit dem glasfaserverstärkten Harz beschichtet wird, um die Leckage von säurehaltiger Flüssigkeit zu verhindern.

6. Vorrichtung nach Anspruch 4, dadurch gekennzeichnet, daß die Verteilerkopfflansche (22, 23) ein Profil haben, das eine vordere Flanschverbindung mit dem inneren rohrförmigen Gußformbauteil (12) ermöglicht, um ein besseres Muffenverbindungsprofil (6, 7) zwischen den verschiedenen Rohrabschnitten zu erhalten,

7. Vorrichtung nach Anspruch 6, dadurch gekennzeichnet, daß die Flansche (22, 23) auch zwei Umfangsdichtungen (24) umfassen, welche mit dem inneren rohrförmigen Gußformbauteil (12) bzw. dem externen Teil des Rohres (1) aneinanderstoßen, um eine maximale Abdichtung gegen Leckage des Harzes während des Spritzgießens unter hohem Druck zu erhalten.

## Revendications

1. Procédé de revêtement de tuyaux en béton ayant une extrémité mâle et une partie femelle avec une bride comprenant les étapes suivantes :
- préparation d'un revêtement de laine de verre,
- application de celui-ci autour d'un élément tubulaire,
- ledit élément tubulaire agissant comme un support pour ledit revêtement et comme une matrice pour une injection ultérieure de résine biphénolique ou isophtalique,
- ledit élément étant équipé d'un secteur longitudinal mobile opérant entre deux épaulements plans inclinés comme un expanseur qui presse le revêtement de laine de verre uniformément contre la paroi intérieure du tuyau de béton avant et pendant l'injection des résines et permettant ensuite le détachement de l'élément tubulaire à partir du tuyau et son extraction lorsque le revêtement a séché,
- ledit élément tubulaire étant également pourvu de deux flancs mobiles qui viennent respectivement en butée sur la partie de bride femelle et l'extrémité mâle du tuyau respectivement,
- la bride femelle ayant des raccords pour l'injection des résines et un profil interne qui est l'inverse du siège de socle du tuyau en béton,
- insertion de l'élément tubulaire dans le tuyau de béton,
- contre-bridage, positionnement correct et verrouillage de l'élément tubulaire dans le tuyau de béton,
- injection des résines en bloc,
- après solidification, libération du secteur mobile, déconnexion des brides et extraction de l'élément tubulaire hors du tuyau fini.

2. Procédé selon la revendication 1, caractérisé en ce que ledit revêtement (18) consiste en une couche anti-acide (19), un matelas de laine de verre (20) et en une seconde couche anti-acide (21) qui est ensuite imprégnée par une résine biphénolique ou isophtalique pour former une couche de protection résistant à tout type d'agent acide.

3. Procédé selon la revendication 1, caractérisé en ce que ledit élément de matrice tubulaire a également deux têtes de brides prévues pour agir comme contre-rabats de sorte que les sièges des connexions mâle-femelle du tuyaux puissent être revêtus en bloc.

4. Equipement (11) pour revêtir des tuyaux en béton (1) ayant une extrémité mâle (5) et une partie femelle avec bride (6), par un revêtement de laine de verre et une injection subséquente de résine biphénolique ou isophtalique, comprenant un élément tubulaire (12) équipé d'un secteur mobile (13) opérant entre deux épaulements plans inclinés (14), agissant comme un expanseur qui presse le revêtement de laine de verre (2) uniformément contre la paroi interne du tuyau de béton (1) avant et durant l'injection des résines, et permet ensuite le détachement de l'élément tubulaire (12) du tuyau et son extraction après séchage du revêtement; ledit élément tubulaire (12) étant également pourvu de deux brides mobiles (15, 16) qui viennent respectivement en butée contre la partie femelle en bride (6) et l'extrémité mâle (5) du tuyau en béton (1); la bride femelle (15) ayant des connexions (17) pour l'injection des résines et un profil interne qui est inverse de celui du siège de socle du tuyau de béton.

5. Equipement selon la revendication 4, caractérisé en ce que la bride mobile (15) permet que le siège circulaire (9) de la connexion de socle, pourvue d'un joint (10) soit revêtue avec de la résine renforcée de fibre de verre, en vue d'éviter les fuites d'un liquide acide.

6. Equipement selon la revendication 4, caractérisé en ce que les brides (22, 23) de têtes ont un profil qui permet une connexion avec rabat frontal avec l'élément de matrice tubulaire interne (12) en vue d'obtenir un meilleur profil de connexion mâle-femelle (5, 6) entre les différentes sections de tuyaux.

7. Equipement selon la revendication 6, caractérisé en ce que lesdites brides (22, 23) comprennent également deux joints toriques (24) qui viennent en butée contre l'élément de matrice interne tubulaire (12) et la partie externe du tuyau (1) en vue d'obtenir l'étanchéité maximale contre la fuite de résine durant son injection sous haute pression.
